# EUROPEAN PATENT APPLICATION

(11) **EP 2 282 459 A1**
(43) Date of publication of application: **09.02.2011**
(21) Application number: 10007068.9
(22) Date of filing: 08.07.2010
(51) Int. Cl.: H04L 12/56

(54) **Link state routing protocols for database synchronisation in GMPLS networks**

(30) Priority: 22.07.2009 US 507233
(71) Applicant: Telefonaktiebolaget L M Ericsson (PUBL), S-164 83 Stockholm (SE)
(72) Inventor: Kern, András, Budapest, H-1118 (HU); Császár, András, Budapest, H-1125 (HU); Tremblay, Benoit, C., Quebec, H7Y 1G2 (CA)
(74) Representative: Röthinger, Rainer

(57) **Abstract**

The present invention relates to a method and apparatus for synchronizing local databases maintained control plane (CP) nodes in a GMPLS network. CP nodes that are not involved in path computation do not need to store the TE information contained in opaque link state advertisements (LSAs). These CP nodes only store that part of an opaque LS which is used during the flooding procedure to verify if the LS is new or updated. This verification is based on a few fields of the LSA that contain link state (LS) identifying information. A CP node that is not involved in path computation stores only the LS identifying information and discards the remainder after the LSA is relayed to it neighbor CP nodes.

## Description

### TECHNICAL FIELD

The present invention relates generally to Generalized MultiProtocol Label Switching (GMPLS) networks and, more particularly, to link state routing protocols for synchronizing databases in a GMPLS network.

### BACKGROUND

In conventional IP networks, routers within the network determine how to forward packets based on the destination IP address in the header of the IP packet. Each router determines on its own the next hop in the forwarding path. Thus, packets do not follow a predefined path from the originating node to the final destination node.

MultiProtocol Label Switching (MPLS) was originally developed to speed up packet forwarding and to enable traffic engineering in IP networks. To speed up packet forwarding in MPLS networks, "labels" are appended to IP packets and forwarding decisions are based on the appended label, without the need to examine the contents of the IP packet. Labels can also be used to create a predefined path, referred to as a label switched path (LSP), through the MPLS network to meet bandwidth and quality of service (QoS) objectives. The creation of a predefined path was not possible with conventional address-based routing schemes.

Generalized MPLS (GMPLS) provides a common control plane to cover multiple switching technologies, e.g., packet, layer-2, TDM, lambda, and fiber (port) switching. These extensions enable a network operator to provision a predefined path or LSP based on bandwidth or QoS requirements for a particular flow that traverses several different types of networks. For example, a user flow originating from a user may travel through an Ethernet (e.g., PBB-TE) access or edge network that aggregates flows from multiple users and feeds a SONET-based or ATM-based metro network, which in turn aggregates multiple flows and feeds a long-haul network that employs wavelength division (lambdas). One challenge of GMPLS is to provide a suite of protocols for the establishment, maintenance, and management of paths through heterogeneous networks so that the data plane can efficiently transport the data over the network.

In GMPLS, an LSP for a packet flow can be calculated in a distributed fashion or by one or more centralized node. In the case of distributed path calculation, either the entire path of a packet flow is computed by the source node, or the next hop is computed at each node that receives the packet flow. In some cases, the source node may compute a first segment of the LSP, and the control plane node at the end of the first segment may compute the next segment of the path. In the case of centralized path calculation, a dedicated Path Computation Element (PCE) computes the LSP for each packet flow and other control plane (CP) nodes are not involved in path computation. The procedure for computing the LSP is referred to herein as the Path Computation Function (PCF). More than one PCE may be provided to achieve higher availability and/or higher computational capacity.

For path computation, the PCF relies on a traffic engineering database (TED) that contains traffic engineering (TE) information. The TED is actually a subset of a larger database, referred to herein as the Link State Database (LSDB). The LSDB/TED is maintained and synchronized by TE extended versions of link state routing protocols (e.g., the OSPF-TE and ISIS-TE in GMPLS), which have been developed to distribute TE information. The operation of the link state routing protocols requires that each CP node maintain their own copy of the entire LSDB/TED. Synchronization of the LSDB/TED is maintained through the use of link state advertisements (LSAs) in a process known as flooding. When the status of a link changes, or changes are made in the topology of the network, a source CP node generates an LSA and sends the LSA to each of its neighbors. A CP node that receives an LSA determines whether the LSA pertains to a new or updated LS. If so, the receiving CP node updates its own LSDB/TED and link state database (LSDB) and then sends the LSA to each of its neighbors, except the one from which the LSA was received. The flooding procedure ensures that, within a reasonable time, all CP nodes will receive the LSA and thus have the same LSDB/TED.

Because the content of the LSDB/TED (TE-links and TE characteristics of routers) is not relevant to the routing protocol, the TE information contained in the LSA is treated as data and is advertised without processing the content. The TE-link information, for example, is stored as opaque link states (LSs) and is carried in the Link type length value object (TLV) of an opaque LSA in OSPF-TE (RFC 4203), or in an Extended Reachability TLV in ISIS-TE (RFC 5307).

In a large network with thousands or tens of thousands of CP nodes, it may not be feasible or practical to run a path computation engine in each CP node due to the required computational power. In heterogeneous networks using multiple switching technologies, the path calculation algorithms typically have high complexity that significantly increases the computational requirements of a CP node. Therefore, it is expected that some deployments will use designated CP nodes acting as PCEs to perform path computation, which can be optimized for path computation. In such scenarios, the PCE nodes will be the primary consumers of data plane link state information. The rest of the CP nodes will take part in the flooding procedure but will not directly use the TE information in the opaque LSs.

Due to huge increases in the network size and complexity, the size of the LSDB/TED grows significantly. The increase in the network size means that there will be an increase of the number and size of LSs. The number of opaque LSs will increase not only because more physical links are present in the network, but also because forwarding adjacency LSPs (FA-LSPs) are being advertised as TE-links (e.g., an edge-to-edge tunnel is shown to upper layers as a link). The size of opaque LSs is another concern. An opaque LS could significantly increase in size if newly proposed extensions (like that of WSON) are implemented.

As the path computation is likely to happen in dedicated PCE nodes only, the content of the opaque LSs describing data links will have no significance to other nodes that are not involved in path computation. However, according to the existing GMPLS routing protocols, each node must store and handle these opaque LSs. This requirement introduces not only larger memory consumption but may increase opaque LS processing times.

### SUMMARY

The present invention relates to a method and apparatus for synchronizing local databases maintained by CP nodes in a GMPLS network. CP nodes that are not involved in path computation do not need to store the TE information contained in opaque LSAs. These CP nodes only store that part of an opaque LS which is used during the flooding procedure to verify if the LS is new or updated. This verification is based on a few fields of the LSA that contain LS identifying information. A CP node that is not involved in path computation stores only the LS identifying information and discards the remainder after the LSA is relayed to it neighbor CP nodes.

When a CP node joins (starts) or rejoins (restarts) the control plane of the GMPLS network, it synchronizes its own local database. More particularly, the (re)starting control plane node 20 node acquires a header list from a neighboring control plane node 20. The (re)starting control plane node 20 may use the header list to rebuild the LSDB. If the (re)starting control plane node 20 needs additional information about a particular link LS, the (re)starting control plane node 20 may then send an LS request to the neighboring node to obtain information about new or updated link states. If the neighboring CP nodes do not have a full database, they will relay the request until it reaches either the advertising CP node (the node originating the LS) or another node having a full copy of the database. The replies from the advertising CP node or other node having a full copy of the database will be relayed back to the (re)starting CP node.

One exemplary embodiment of the present invention relates to a method implemented by a CP node in a communication network of synchronizing a local database. The method comprises receiving an opaque link state advertisement; determining whether a link state refers to a new or updated link state based on link state identifying information in said link state advertisement; and if the link state is a new or updated link state, updating a local database to include a compressed link state containing the link state identifying information and discarding a remainder of the link state.

Other embodiments of the present invention relate to a control plane node in a GMPLS network. One exemplary control plane node comprises a network interface for communicating with other control plane nodes in said GMPLS network; and a processing unit for synchronizing a local database maintained by the control plane node. The processing unit in one exemplary embodiment is configured to receive via said network interface an opaque link state advertisement; determine whether a link state refers to a new or updated link state based on link state identifying information in said link state advertisement; and if the link state is a new or updated link state, update said local database to include a compressed link state containing the link state identifying information and discarding a remainder of the link state.

### BRIEF DESCRIPTION OF THE DRAWINGS

Fig. 1 illustrates a GMPLS network
Fig. 2 is a flow diagram illustrating a flooding for handling opaque link states implemented at a CP node that is not involved in path computation.
Fig. 3 is a schematic diagram illustrating a relaying procedure for relaying a request from a (re)starting node to another node having a full copy of a LSDB/TED.
Fig. 4 is a schematic diagram illustrating a relaying procedure for relaying a request from a (re)starting node to another advertising CP node.
Fig. 5 is a flow diagram illustrating a procedure for relaying a request from a (re)starting node toward another node.
Fig. 6 is a block diagram illustrating an exemplary CP node for implementing the modified link state routing protocols.

### DETAILED DESCRIPTION

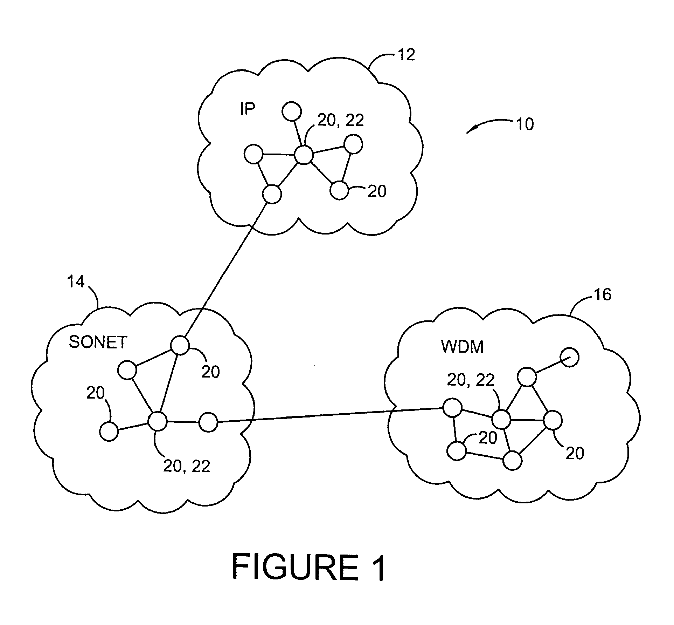

Fig. 1 illustrates the control plane (CP) of an exemplary GMPLS network 10. GMPLS network 10 comprises a heterogeneous network that implements multiple switching technologies. In the illustrated embodiment, the GMPLS network 10 encompasses an Ethernet network 12, a SONET network 14, and a wave division multiplexing (WDM) network 16. Those skilled in the art will appreciate that the constituent networks 12, 14, 16 in the GMPLS network 10 may also use other switching technologies, such as layer-2 switching or fiber (port) switching.

The control plane of GMPLS network 10 comprises a plurality of CP nodes 20 for implementing GMPLS signaling and routing protocols. The routing and signaling protocols include traffic engineering (TE) extensions to facilitate multiple switching technologies. The routing protocols include an extended version of the Open Shortest Path First (OSPF-TE) protocol (RFC 4203) and an extended version of the Intermediate System to Intermediate System (ISIS-TE) protocol (RFC 5307). An exemplary signaling protocol for the control plane of the GMPLS network 10 is the extended version of the Resource Reservation Protocol (RSVP-TE) (RFC 3209) and the Constraint-based Routing Label Distribution protocol (CR-LDP).

One or more of the CP nodes 20 may be designated to function as path computation elements (PCEs) 22. PCEs 22 implement a path computation function (PCF) to compute and provision label switched paths (LSPs) through the data plane of the GMPLS network 10 to meet bandwidth and/or quality of service (QoS) objectives. A signaling protocol is used to distribute labels for provisioning the LSPs. The two most popular signaling protocols for label distribution are the RSVP-TE and CR-LDP protocols.

For path computation, PCE 22 relies on a traffic engineering database (TED) that contains traffic engineering (TE) information. The TE information may comprise, for example, descriptions of TE links connecting nodes (routers) in the data plane of the GMPLS network 10, and TE characteristics of those nodes (routers). The TED is a subset of the information contained in the Link State Database (LSDB) by each CP node 20. Conventionally, each CP node 20, including the PCE nodes 22, maintains a complete copy of the LSDB/TED.

Synchronization of the LSDB/TEDs at different CP nodes 20 is maintained using a link state routing protocol, such as the OSPF-TE or ISIS-TE protocols in GMPLS. The link state routing protocol uses link state advertisements (LSAs) in a process known as flooding to synchronize the LSDB/TEDs residing on different CP nodes 20 of the GMPLS network 10. When changes are made in the topology of the network, or the state of a link changes, a source CP node 20 generates an LSA, and sends the LSA to each of its neighbors. A CP node 20 that receives an LSA from its neighbor determines whether the LSA contains a new or updated link state (LS). If so, the receiving CP node 20 updates its own LSDB/TED and forwards the LSA to each of its neighbors, except the one from which the LSA was received. The flooding process ensures that, within a reasonable time, all CP nodes 20 will receive the LSA and thus have the same LSDB/TED. Because the content of the LSDB/TED (e.g., TE links and TE characteristics of routers) is not relevant to the link state routing protocol, the TE information contained in the LSA is treated as data and is advertised without processing the content. For example, the TE link information is stored as opaque link states (Opaque LSs) and is carried in the link TLV of an Opaque LSA in OSPF-TE, or in an extended reachability TLV in ISIS-TE.

The TE information contained in Opaque LSAs is not relevant to the CP nodes 20 that are not involved in path computations for LSPs. Nevertheless, the link state routing protocol requires that these nodes maintain a complete copy of the LSDB/TED.

Consequently, the CP nodes 20 and in conventional GMPLS networks 10 store the full content of the LSs even though the TE information is superfluous. As the LSDB/TED increases in size, the memory required to store the LSDB/TED also increases. Further, time needed for handling the LSAs increases due to the increased size of the LSDB/TED.

The embodiments of the present invention described herein modify the link state routing protocols implemented by the CP nodes 20 to change the way opaque LSAs are handled. More specifically, CP nodes 20 that are not involved in path computation do not need to store the TE information contained in Opaque LSAs. These CP nodes 20 only store that part of an Opaque LS which is used during the flooding procedure to verify if the LS is new or updated. This verification is based on a few fields of the LSA, which are referred to herein as the link state (LS) identification fields. The information contained in the LSA not needed for routing is referred to as the remainder. According to the present invention, a CP node 20 that is not involved in path computation stores only the LS identifying information and discards the remainder after the LSA is relayed to it neighbor CP nodes 20.

When a CP node 20 joins or rejoins the control plane of the GMPLS network 10, it must synchronize its own LSDB/TED. In a conventional GMPLS network 10, the (re)starting control plane node 20 node acquires a header list from a neighboring control plane node containing LS identifying information for LSs in its LSDB. The (re)starting control plane node 20 uses the acquired header list to identify any new or updated LSs. The (re)starting control plane node 20 may use the header list to rebuild the LSDB. If the (re)starting control plane node 20 needs additional information about a particular link LS, it sends an LS request to the neighboring control plane node 20 to obtain information about new or updated link states. In the GMPLS network 10 according to the present invention, the neighboring CP nodes may not have a full LSDB/TED. In this case, the neighboring control plane node 20 may relay the request until it reaches either an advertising CP node (the node originating the LS) or another node having a full LSDB/TED. An advertising CP node 20 always stores a full copy of the link state. The replies from the advertising CP node or other node having a full LSDB will be relayed back to the joining CP node 20.

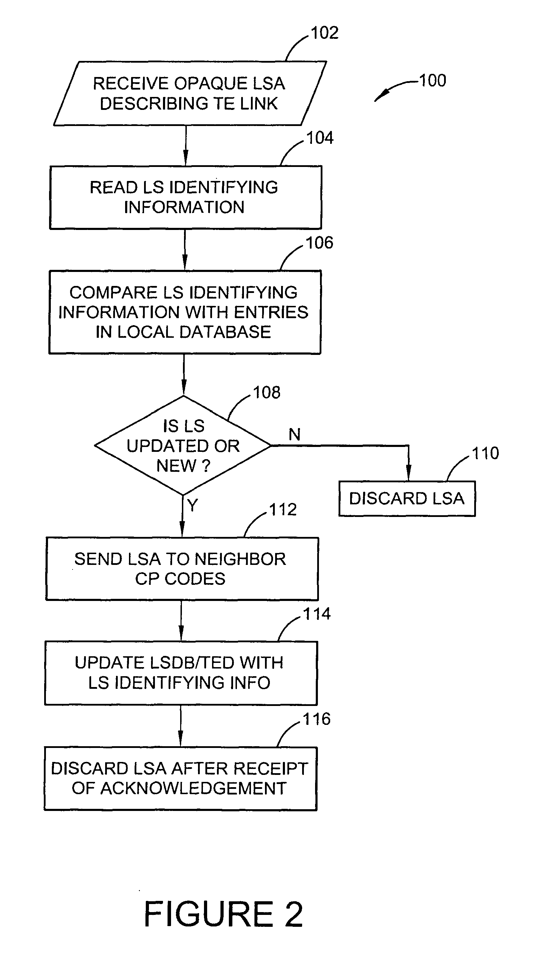

Fig. 2 illustrates an exemplary procedure 100 implemented by a CP node 20 that is not involved in computation of LSPs for relaying opaque LSAs. The procedure 100 shown in Fig. 2 may be used with any opaque LSA describing a TE link. The process begins when CP node 20 receives an opaque LSA describing a TE link (block 102). A routing function of the CP node 20 reads the LS identifying information contained in the LSA (block 104), and compares the LS identifying information with the entries in its local copy of the LSDB/TED (block 106). Based on the comparison, the routing function determines whether the link state identified by the LSA is a new or updated link state (block 108). If the link state is not a new or updated link state, the LSA is discarded (block 110). On the other hand, if the link state is a new or updated link state, the routing function of the CP node 20 sends the full LSA to each of its neighbors, except the one from which the LSA was received (block 112). The CP node 20 also updates its local LSDB/TED to include a compressed link state including only the LS identifying information (block 114). The entire LSA is stored in a temporary memory pending acknowledgement of the LSA by its neighbors and is deleted from temporary memory once the acknowledgement is received (block 116). Thus, only the LS identifying information is stored in the LSDB/TED and the remainder of the LS is discarded. Because Opaque LSs describing TE links are always flooded before being discarded, the procedure ensures that all new LS information reaches the nodes 20 which need the full LSDB or LSDB/TED, e.g., a PCE 22.

In GMPLS networks 10 that use OSPF-TE as the link state routing protocol, the opaque LSA option is defined in RFC 5250. OSPF-TE defines two types of TLVs: router address TLVs and Link TLVs. Router Address TLVs declare a router ID of a GMPLS CP node 20, and Link TLVs carry information describing TE links. The Link TLVs are the ones that raise scalability concerns. Therefore, the LS identifying information only is retained for Link TLVs unless the Link TLV refers to a CP node 20 that is in Router Adjacency or Forwarding Adjacency relation to the relaying CP node 20. All other LSAs should be retained. For example, router information opaque LSAs (RFC 4970) are used to indicate specific capabilities of a CP node 20. For example, the Router Information Opaque LSA may indicate that a CP node 20 is capable of P2MP signaling (RFC 5073) or that it is capable of being a PCE (RFC 5088). Therefore, these types of opaque LSAs should be retained in the local LSDB/TED.

In OSPF-TE, the link state identifying information required for the flooding procedure is defined in RFC 2328. The LS identifying information includes five fields: the LS type, LSID, advertising router, the sequence number, and age. The remaining fields do not need to be retained by a CP node 20 that is not involved in path computation.

The GMPLS network 10 may also use ISIS-TE (RFC 5305) as the link state routing protocol. This protocol uses the Extended IS Reachability TLV to advertise the TE link description and the Traffic Engineering Router ID TLV to indicate the router ID of a GMPLS CP node 20. The Extended IS Reachability TLVs are the ones that raise scalability concerns. Therefore, the LS identifying information only is retained for LSAs that include the extended IS Reachability TLV unless the LS refers to nodes that are in Router Adjacency or Forwarding Adjacency relations to the CP node 20. The entire content of other LSAs may be retained.

In ISIS-TE, the LS identifying information comprises four fields: the LSP ID field, the sequence number field, the remaining lifetime field, and a check sum. These four fields of opaque LSAs containing TE link descriptions should be retained. The remaining fields may be discarded after the LSA is acknowledged by the neighboring nodes.

The ISIS-TE protocol allows mixing of TE descriptive TLVs with other TLVs in a single LSA. To ensure backward compatibility, any LSA containing mixed types of TLVs should be handled in a conventional fashion.

In a conventional GMPLS network, a CP node 20 typically acquires the complete LSDB/TED from its neighbors when it starts or restarts. In some implementations, the neighboring nodes detect the new CP node 20 when it joins the control plane of the GMPLS network 10 and begins sending the link states to the new CP node 20. In other implementations, the CP node 20 joining the control plane of the GMPLS network 10 may send explicit requests for link states to its neighbors. In GMPLS networks 10, according to the present invention, the neighboring nodes may not have a complete copy of the LSDB/TED. Therefore, if the CP node 20 rejoining the control plane of the GMPLS network 10 is a PCE 22, it may not be able to acquire the full LSDB/TED from its neighboring nodes 20. Therefore, a mechanism is provided to enable a starting or restarting PCE 22 to acquire the full LSDB/TED.

The full link state information can be acquired from either a node having a full copy of the LSDB/TED (e.g., another PCE 22), or the advertising CP node 20 for the LS. According to embodiments of the present invention, a CP node 20 that has a compressed version of the LSDB/TED, which is referred to herein as a relaying CP node 20, can relay an LS request received from a (re)starting CP node 20 towards either another CP node 20 containing a complete copy of the LSDB/TED or the advertising CP node 20.

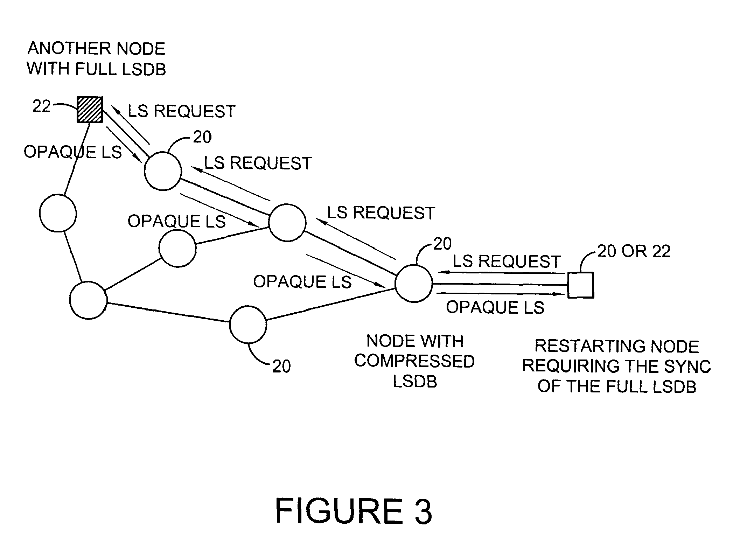

Fig. 3 illustrates LSDB synchronization between a (re)starting CP node 20 and another node having a full LSDB. As shown in Fig. 3, the restarting node 20 sends an LS request to a neighboring CP node 20. Upon receiving the LS request, the neighboring CP node 20 identifies another CP node 20 having a full copy of the LSDB (e.g., a PCE 22 or a CP node 20 with a full LSDB/TED) and relays the request toward the identified CP node 20. The LS request may be relayed from one CP node 20 to another until it reaches the CP node 20 with the full LSDB/TED. One advantage of this approach is that each LS request from the (re)starting CP node 20 is forwarded to the same destination node.

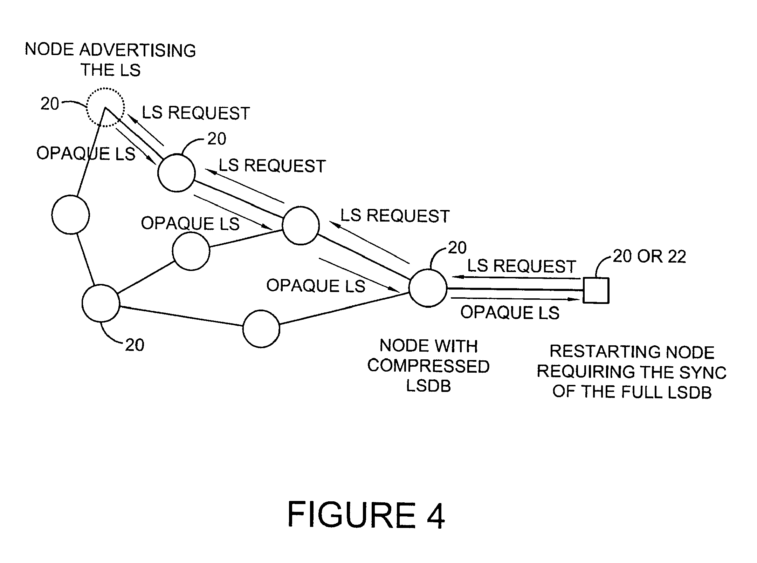

Fig. 4 illustrates LSDB synchronization between a (re)starting CP node 20 and one or more advertising CP nodes 20. In this example, the (re)starting CP node 20 generates and sends an LS request to a neighboring CP node 20 with a compressed LSDB/TED. The neighboring CP node 20 identifies the advertising CP node 20 for each LS request (e.g., from advertising router ID) and forwards the LS request toward the advertising node 20. In this approach, different LS requests may be sent along different paths to different advertising CP nodes 20. This approach is possible only if the advertising router ID is part of the LS identifying information, e.g., when OSPF-TE is used as the link state routing protocol.

When a relaying CP node 20 forwards the LS request, it will subsequently receive a corresponding LSA responsive to the LS request. In the case of an unsolicited LSA, the LSA is discarded if the link state identifying information matches an entry in the compressed LSDB of the CP node 20. This procedure needs to be modified for a solicited LSA that is sent in response to an LS request. In the case of a solicited LSA, the CP node 20 receiving the solicited LSA should forward the LSA toward the (re)-starting node 20, i.e., toward the node 20 from which it received the LS request, even if it already has a matching entry in its local copy of the LSDB/TED. If the solicited LSA identifies a link state that is new or updated, the solicited LSA should be treated the same as an unsolicited LSA as shown in Fig. 2.

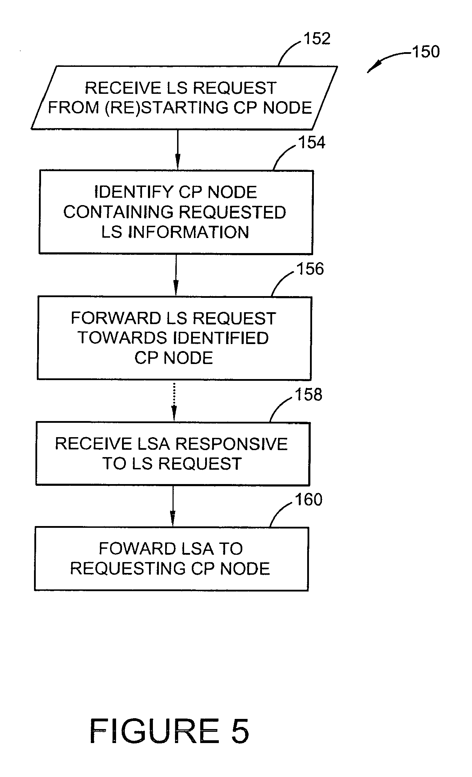

Fig. 5 illustrates an exemplary procedure 150 implemented by a relaying CP node 20 for relaying LS requests from a (re)starting CP node 20. Procedure 150 begins when the relaying CP node 20 receives an LS request from a (re)starting CP node 20 (block 152). Upon receipt of the LS request, the relaying CP node 20 identifies another node 20 containing the requested link state information (block 154), which is referred to herein as the source control plane node 20 for the requested information. In some embodiments, the relaying CP node 20 identifies a source CP node 20 having a full copy of the LSBD/TED. In other embodiments, the relaying CP node 20 identifies an advertising CP node 20 for the requested link state, which is a source control plane node 20 for a particular LSA. Once a source CP node 20 containing the requested information is identified, the relaying CP node 20 forwards the LS request toward the identified CP node 20 (block 156). The relaying CP node 20 may thereafter receive a solicited LSA that contains the requested LS information (block 158). In the event that a solicited LSA is received by the relaying CP node 20, it forwards the solicited LSA to the CP node 20 from which it received the LS request (block 160). If the solicited LSA refers to a new or updated link state, the relaying CP node 20 may also implement the standard floating procedure as shown in Fig. 2.

The relaying procedure 150 for relaying LS requests can be implemented by modifying the handling procedure for LSAs and does not require any new protocol messages. If a legacy CP node 20 having a complete copy of the LSDB/TED receives the LS request, it will simply answer the LS request by providing the requested information.

In some embodiments of the invention, the database synchronization procedure may be initiated by a neighboring CP node 20 when a CP node 20 is started or restarted. In the case of a GMPLS network 10 that implements OSPF-TE, the neighboring CP node 20 sends a database description (DD) message to the (re)starting CP node 20. The DD messages list the LS identifiers, which is the information that is retained in the compressed LSDB/TED. The (re)starting CP node 20 verifies its local copy of the LSDB/TED using the LS identifiers received in the DD messages. In a conventional system, the (re)starting CP node 20 would generate and send an LS request to a neighbor CP node 20 for each new or updated LS identified in the DD messages. The neighboring CP node 20 would then respond to the LS request by sending the requested link state information.

According to the present invention, the operation of the (re)starting CP node 20 is slightly modified depending on whether the (re)starting CP node 20 requires the full LSDB/TED. If the (re)starting CP node 20 is involved in path computations and requires the full LSDB/TED, the (re)starting CP node 20 sends an LS request to the neighboring CP node 20 that sent the DD messages. If the neighboring CP node 20 does not have the full LS information, the neighboring CP node 20 can relay the LS request as previously described. Upon receipt of the requested link state information, the neighboring CP node 20 may then forward the link state information to the (re)starting CP node 20.

If the (re)starting CP node 20 is not involved in path computation and does not require the full LSDB/TED, the (re)starting CP node 20 can use the DD messages from the neighboring CP node 20 to rebuild the LSDB/TED. As to any LSs describing TE links, the DD messages already contain the LS identifying information that is needed for the compressed LSDB. Thus, the link states that pertain to TE link descriptions can be updated from the DD messages.

A similar procedure may be used in GMPLS networks 10 that use ISIS-TE as the link state routing protocol. In the case of a GMPLS networks 10 that uses ISIS-TE, the neighboring CP node 20 sends a Complete State Sequence Number PDU (CSNP) message to the (re)starting CP node 20 when the (re)starting CP node 20 is detected. The CSNP message lists the LSP identifiers containing the LS identifying information. The (re)starting CP node 20 uses the received CSNP messages to verify its local copy of the LSDB/TED database. If a CSNP refers to a new or updated LSP, the (re)starting CP node 20 sends a partial sequence number PDU (PSNP) to the neighboring CP node 20 identifying the requested LSP. In a conventional GMPLS network 10, the neighbor CP node 20 would respond by sending the requested LSP.

According to the present invention, the synchronization procedure for a (re)starting CP node 20 is modified slightly, depending on whether the (re)starting CP node 20 is involved in path computations. If the (re)starting CP node 20 is involved in path computations, and therefore needs a complete copy of the LSDB/TED, the (re)-starting CP node 20 will operate according to the conventional procedure and send a PSNP to the neighboring CP node 20 for each new or updated LSP. The neighboring CP node 20 may then relay the PSNP as previously described toward another CP node 20 that includes the complete LSDB/TED.

If the (re)starting CP node 20 is not involved in path computations, and therefore does not need a complete copy of the LSDB/TED, the (re)starting CP node 20 may use the CSNP messages to rebuild the LSDB/TED. As previously noted, the CSNP messages contain the same LS identifying information that is contained in the compressed LSDB/TED. In the case of CSNP messages pertaining to anything other than TE link descriptions, the identifying information CP node 20 can send a PSNP to the neighboring CP node 20 identifying the requested LSP. The neighboring CP node 20 can reply by sending the requested LSP.

In the case where a neighboring CP node 20 relays an LS request toward another CP node 20 containing a full copy of the LSDB/TED, the neighboring CP node 20 needs to know which nodes have the full LSDB/TED According to one embodiment of the present invention, each CP node 20 advertises whether it maintains compressed or full copies of opaque LSs. In GMPLS networks 10 using OSPF-TE, the OSPF related properties of the advertising CP node 20 are encoded and sent in a Router LSA. To advertise whether a compressed or full copy of opaque LSs is maintained, a new one-bit flag is included in the Router LSA. The flag is set to "1" if the advertising CP node 20 applies the revised opaque LS handing procedure described herein. The flag is set to "0" if the advertising CP node 20 uses the conventional procedures.

In networks that implement ISIS-TE, a flag is added to the Router Capability TLV to indicate whether the advertising CP node 20 implements the revised Opaque LS handling procedure. The flag is set to "1" if the advertising CP node 20 applies the revised procedures, and is set to "0" if the node 20 uses the conventional procedures.

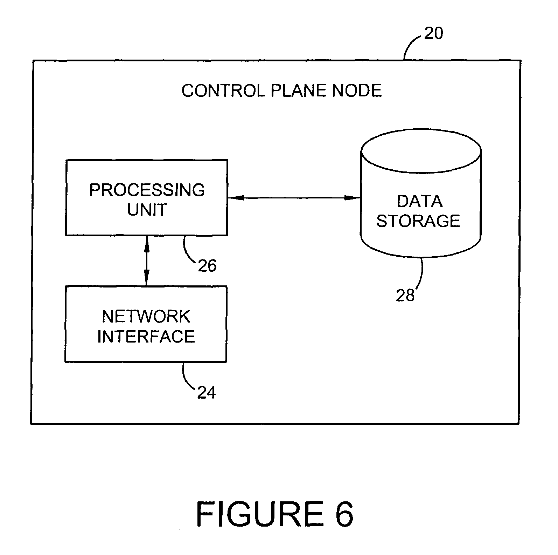

Fig. 6 illustrates an exemplary control plane (CP) node 20 which may also serve as a PCE 22. The CP node 20 comprises a network interface 24 and processing unit 26. Network interface 24 connects the CP node 20 with other CP nodes 20. The network interface 24 may comprise, for example, a IP or Ethernet interface. Processing unit 26 comprises one or more processors, microprocessors, hardware, or a combination thereof for implementing GMPLS protocols, including the link state routing protocols and signaling protocols discussed herein. The processing unit 26 is configured to implement the modified link state routing procedures illustrated in Figs. 2 and 5. CP node 20 also includes a local data storage unit 28 for storing the LSDB/TED. The data storage unit 28 may comprise any known type of data storage, including magnetic storage units or optical storage units.

The present invention enables the reduction in the size of the LSDB/TED that must be maintained by CP nodes 20 that are not involved in path computations. The gains are two-fold. First, the overall memory requirements are significantly decreased because the number and size of opaque LSs describing TE links is larger than the number of control plane networking LSAs. Decreasing the LSDB/TED size accelerates the protocol operation itself because all LSDB/TED look-up and handling operations are performed using a smaller database. The invention is applicable to GMPLS networks 10 that use both OSPF-TE and ISIS-TE as the link state routing protocol. The present invention also provides a mechanism for synchronizing a (re)starting CP node 20 without requiring message format extension or modification. The synchronization procedure can be modified by simply modifying the logic applied at the (re)starting and neighboring CP nodes 20. The methods described herein are backward compatible with legacy CP nodes 20.

The present invention may, of course, be carried out in other ways than those specifically set forth herein without departing from essential characteristics of the invention. The present embodiments are to be considered in all respects as illustrative and not restrictive, and all changes coming within the meaning and equivalency range of the appended claims are intended to be embraced therein.

## Claims

1. A method implemented by a control plane node in a communication network of synchronizing a local database, said method comprising:
receiving an opaque link state advertisement;
determining whether a link state refers to a new or updated link state based on link state identifying information in said link state advertisement; and
if the link state is a new or updated link state, updating a local link state database to include a compressed link state containing the link state identifying information and discarding a remainder of the link state.

2. The method of claim 1 further comprising sending the opaque link state advertisement to one or more neighboring nodes if the identified link state is a new or updated link state.

3. The method of claim 1 wherein said opaque link state advertisement contains a description of a traffic engineering link.

4. The method of claim 3 wherein the opaque link state contains a Link TLV according to OSPF-TE describing the traffic engineering link and wherein the LS identifying information comprises a link state type, a link state ID, an advertising router ID, a sequence number, and an age, or
wherein the opaque link state contains an Extended IS Reachability TLV according to ISIS-TE describing the traffic engineering link and wherein the link state identifying information comprises an LSP ID, a sequence number, a remaining lifetime, and a checksum.

5. The method of claim 1 further comprising:
receiving a link state request from a requesting control plane node requesting information for a specified link state;
relaying said link state request toward a source control plane node maintaining information on the requested link state;
receiving the requested link state information responsive to the link state request; and
forwarding the requested link state information to the requesting control plane node.

6. The method of claim 5 wherein relaying said link state request toward a source control plane node maintaining information on the requested link state comprises relaying the link state request to an advertising control plane node, and, optionally, wherein the advertising control plane node is determined based on advertising router information in the link state identifying information.

7. The method of claim 5 wherein relaying said link state request toward a source control plane node maintaining information on the requested link state comprises relaying the link state request to a control plane node having an uncompressed link state database.

8. The method of claim 7 wherein the source control plane node is determined based on a router advertisement identifying said source control plane node as a path computation element, or wherein the source control plane node is determined based on a router advertisement containing a flag indicating whether said control plane node maintains an uncompressed link state database.

9. The method of claim 1 further comprising advertising an opaque link state handling method employed by the control plane node.

10. The method of claim 1 further comprising:
receiving a header list from a neighboring node when the control plane node (re)starts, said header list including link state identifying information for one or more link states in a local link state database maintained by the neighboring control plane node; and
updating one or more opaque link states stored in a local link state database using only link state identifying information contained in said header list.

11. The method of claim 10 wherein the header list is contained in one or more Data Description messages according to the OSPF-TE protocol, or wherein said header list is contained in one or more Complete Sequence Number PDU messages according to the ISIS-TE protocol.

12. A control plane node for a GMPLS network, said control plane node comprising:
a network interface for communicating with other control plane nodes in said GMPLS network; and
a processing unit for synchronizing a local link state database maintained by the control plane node, said processing unit configured to:
receive via said network interface an opaque link state advertisement;
determine whether a link state refers to a new or updated link state based on link state identifying information in said link state advertisement; and
if the link state is a new or updated link state, update said local link state database to include a compressed link state containing the link state identifying information and discarding a remainder of the link state.

13. The control plane node of claim 12 wherein said opaque link state advertisement contains a description of a traffic engineering link, and, optionally, wherein the opaque link state contains a Link TLV according to OSPF-TE describing the traffic engineering link and wherein the link state identifying information comprises a link state type, a link state ID, an advertising router ID, a sequence number, and an age.

14. The control plane node of claim 12 wherein the processing unit is further configured to:
receive a link state request from a requesting control plane node requesting information for a specified link state;
relay said link state request toward a source control plane node maintaining information on the requested link state;
receive the requested link state information responsive to the link state request; and
forward the requested link state information to the requesting control plane node.

15. The control plane node of claim 14 wherein the processing unit is configured to relay the link state request to an advertising control plane node that originated the link state, and, optionally, wherein the processing unit determines the advertising control plane node based on advertising router information in the link state identifying information.

16. The control plane node of claim 14 wherein the processing unit is configured to relay the link state request to a source control plane node having an uncompressed link state database.

17. The control plane node of claim 16 wherein the processing unit determines the source control plane node based on a router advertisement identifying said control plane node as a path computation element, or wherein the source control plane node is determined based on a router advertisement containing a flag indicating whether said control plane node maintains an uncompressed link state database.

18. The control plane node of claim 12 wherein the processing unit is further configured to:
receive a header list from a neighboring node after the control plane node (re)starts, said header list including link state identifying information for one or more link states in a local link state database maintained by the neighboring control plane node; and
update one or more opaque link states stored in a local link state database using only link state identifying information contained in said header list.
